# EUROPEAN PATENT APPLICATION

(11) **EP 3 223 107 A2**
(43) Date of publication of application: **27.09.2017**
(21) Application number: 17151087.8
(22) Date of filing: 11.01.2017
(51) Int. Cl.: G05D 23/19, F24F 11/00

(54) **TEMPERATURE CONTROLLER, ELECTRONIC DEVICE HAVING THE SAME AND CONTROL METHOD THEREOF**

(30) Priority: 25.03.2016 TW 105109469
(71) Applicant: Arcadyan Technology Corporation, Hsinchu City 300 (TW)
(72) Inventor: SHEN, Yi-Hsiang, Hsinchu City 300 (TW); HSIAO, Ho-Chieh, Hsinchu City 300 (TW)
(74) Representative: Lermer, Christoph

(57) **Abstract**

A temperature controller is provided, which includes a first temperature sensor, a heater, a logic circuit, a watchdog circuit and a second temperature sensor. The first temperature sensor may detect the environmental temperature. The heater may be turned on after the temperature controller is turned on. The logic circuit may turn on the watchdog circuit after the environmental temperature is higher than the first temperature for the watchdog circuit to keep detecting whether the main circuit of an electronic device is turned on until the main circuit is turned on. The second temperature sensor may be turned on after the main circuit is turned on and then detect the environmental temperature. The logic circuit may turn off the heater after the second temperature sensor detects the environmental temperature is higher than a second temperature, or turn on the heater when the environmental temperature is lower than a third temperature.

## Description

### CROSS REFERENCE TO RELATED APPLICATION

This application also claims priority to Taiwan Patent Application No. 105109469 filed in the Taiwan Patent Office on March 25, 2016, the entire content of which is incorporated herein by reference.

### TECHNICAL FIELD

The present invention relates to a temperature controller, in particular to a temperature controller of an electronic device. The present invention further relates to an electronic device having the temperature controller and a control method of the temperature controller.

### BACKGROUND

Outdoor electronic devices, such as wireless access point and wireless router, etc., should be installed in outdoor environment; however, if the outdoor temperature is very low, these electronic devices may not work normally due to low temperature; therefore, it is necessary to heat up these electronic devices so as to make sure these electronic devices can work normally.

In general, an outdoor electronic device needs a built-in temperature controller for temperature control, and the temperature controller consists of a temperature sensor, a microcontroller unit (MCU) and a heater. The temperature sensor is used to monitor the environmental temperature; the microcontroller unit is used to control the heater to control the environmental temperature of the electronic device. When the environmental temperature is lower than a predetermined value, the heater is turned on to increase the environmental temperature to another predetermined value; then, the heater is turned off; in this way, the electronic device can work normally.

However, the microcontroller unit is of high cost, which significantly increases the manufacturing cost of the electronic device and decreases its market competitiveness; besides, microcontroller units manufactured by different manufacturers need different programs, which should be designed by different instruction sets; thus, program designers must learn different instruction sets to design programs for the mass production of the electronic device, which significantly increases manpower cost and further increases the cost of the electronic device.

Moreover, if the built-in temperature sensor of the electronic device malfunctions, the heater may not be turned off but keep heating up the electronic device; therefore, the electronic device may be burned, or may even result in a fire disaster; accordingly, the safety of the temperature controller needs to be further improved.

Furthermore, the operation mechanism of the microcontroller unit is complicated, and is hard to be scheduled, which is inconvenient and inflexible in use.

Accordingly, it has become an important issue to provide a temperature sensor capable of improving the problems that the conventional temperature controller is of high cost, of low safety, inconvenient and inflexible in use.

### SUMMARY

In view of the above problems, one primary object of the present invention is to provide a temperature controller, an electronic device having the temperature controller and the control method thereof so as to improving the shortcomings of prior art.

The present invention is related to a temperature controller, which may include a first temperature sensor, a heater, a logic circuit, a watchdog circuit and a second temperature sensor. The first temperature sensor may detect the environmental temperature. The heater may turned on after the temperature controller is turned on so as to increase the environmental temperature. The logic circuit may be coupled to the first temperature sensor and the heater, and may compare the environmental temperature with a first temperature. The watchdog circuit may be coupled to the logic circuit and the main circuit of an electronic device. The second temperature sensor may be coupled to the logic circuit and the main circuit, and may detect the environmental temperature. The logic circuit may turn on the watchdog circuit after the environmental temperature is higher than the first temperature for the watchdog circuit to keep detecting whether the main circuit is turned on until the main circuit is turned on; the second temperature sensor may be turned on after the main circuit is turned on so as to detect the environmental temperature; the logic circuit may turn off the heater after the second temperature sensor detects that the environmental temperature is higher than a second temperature, or may turn on the heater when the environmental temperature is lower than a third temperature.

In a preferred embodiment of the present invention, the temperature controller may further include a heating protector, wherein the heating protector may be coupled to the first temperature sensor and the heater, and may turn off the heater after the first temperature sensor detects that the environmental temperature is higher than a fourth temperature.

In a preferred embodiment of the present invention, the watchdog circuit may keep detecting whether the main circuit is turned on; if the main circuit fails to be turned on, the watchdog circuit may repeatedly turn on the main circuit until the main circuit is turned on.

In a preferred embodiment of the present invention, the main circuit may be a central processing unit.

In a preferred embodiment of the present invention, the logic circuit may include a comparator and a control circuit.

In a preferred embodiment of the present invention, the first temperature sensor may be a hardware sensor.

In a preferred embodiment of the present invention, the heating protector may be a comparator and may be integrated with the logic circuit.

In a preferred embodiment of the present invention, the second temperature sensor may be a software sensor.

In a preferred embodiment of the present invention, the fourth temperature may be higher than the second temperature; the second temperature may be higher than the third temperature; the third temperature may be higher than the first temperature.

The present invention is further related to an electronic device, which may include a main circuit and a temperature controller. The temperature controller may include a first temperature sensor, a heater, a logic circuit, a watchdog circuit and a second temperature sensor. The first temperature sensor may detect the environmental temperature. The heater may turned on after the temperature controller is turned on so as to increase the environmental temperature. The logic circuit may be coupled to the first temperature sensor and the heater, and may compare the environmental temperature with a first temperature. The watchdog circuit may be coupled to the logic circuit and the main circuit. The second temperature sensor may be coupled to the logic circuit and the main circuit, and may detect the environmental temperature. The logic circuit may turn on the watchdog circuit after the environmental temperature is higher than the first temperature for the watchdog circuit to keep detecting whether the main circuit is turned on until the main circuit is turned on; the second temperature sensor may be turned on after the main circuit is turned on so as to detect the environmental temperature; the logic circuit may turn off the heater after the second temperature sensor detects that the environmental temperature is higher than a second temperature, or may turn on the heater when the environmental temperature is lower than a third temperature.

In a preferred embodiment of the present invention, the temperature controller may be coupled to the main circuit, and may be turned on after the main circuit is turned on.

In a preferred embodiment of the present invention, the heater may be turned on after the temperature controller is turned on.

In a preferred embodiment of the present invention, the temperature controller may further include a heating protector, wherein the heating protector may be coupled to the first temperature sensor and the heater, and may turn off the heater after the first temperature sensor detects that the environmental temperature is higher than a fourth temperature.

In a preferred embodiment of the present invention, the watchdog circuit may keep detecting whether the main circuit is turned on; if the main circuit fails to be turned on, the watchdog circuit may repeatedly turn on the main circuit until the main circuit is turned on.

In a preferred embodiment of the present invention, the main circuit may be a central processing unit.

In a preferred embodiment of the present invention, the logic circuit may include a comparator and a control circuit.

In a preferred embodiment of the present invention, the heating protector may be integrated with the logic circuit.

In a preferred embodiment of the present invention, the heating protector may be a comparator.

In a preferred embodiment of the present invention, the first temperature sensor may be a hardware sensor.

In a preferred embodiment of the present invention, the second temperature sensor may be a software sensor.

In a preferred embodiment of the present invention, the fourth temperature may be higher than the second temperature; the second temperature may be higher than the third temperature; the third temperature may be higher than the first temperature.

In a preferred embodiment of the present invention, the fourth temperature may be higher than the second temperature; the second temperature may be higher than the third temperature; the third temperature may be higher than the first temperature.

The present invention is still further related to a temperature control method, which may include the following steps: turning on a heater after a temperature controller is turned on; detecting the environmental temperature by a first temperature sensor; compared the environmental temperature with a first temperature by a logic circuit and turning on a watchdog circuit by the logic circuit when the environmental temperature is higher than the first temperature; keeping detecting whether the main circuit of an electronic device is turned on by the watchdog circuit until the main circuit is turned on; turning on a second temperature sensor by the main circuit; and turning off the heater by the logic circuit when the second temperature sensor detects that the environmental temperature is higher than a second temperature, or turning on the heater when the second temperature sensor detects that the environmental temperature is lower than a third temperature.

In a preferred embodiment of the present invention, the temperature method may further include the following step: turning off the heater by a heating protector when the first temperature sensor detects that the environmental temperature is higher than a fourth temperature.

In a preferred embodiment of the present invention, the temperature method may further include the following step: turning off the heater by a heating protector when the first temperature sensor detects that the environmental temperature is higher than a fourth temperature.

In a preferred embodiment of the present invention, the temperature method may further include the following step: keeping detecting whether the main circuit is turned on by the watchdog circuit, and repeatedly turning on the main circuit by the watchdog circuit if the main circuit fails to be turned on until the main circuit is turned on.

The temperature controller, the electronic device having the temperature controller and the control method thereof in accordance with the present invention may have the following advantages:
(1)According to one embodiment of the present invention, the temperature controller of the electronic device may include a simple logic circuit having a comparator for substituting the microcontroller unit; therefore, the cost of the electronic device can be significantly reduced.
(2)According to one embodiment of the present invention, the temperature controller of the electronic device may include a simple logic circuit having a comparator for substituting the microcontroller unit; thus, the program designer does not need to learn different instruction sets to design the programs for the mass production of the electronic device, which can reduce the manpower cost and further decrease the cost of the electronic device.
(3)According to one embodiment of the present invention, the temperature controller of the electronic device may include a simple logic circuit having a comparator for substituting the microcontroller unit, and the logic circuit is easily to be operated and scheduled; therefore, the temperature controller is convenient and flexible in use.
(4)According to one embodiment of the present invention, the temperature controller of the electronic device may include a second temperature sensor, which can effectively control the environmental temperature to be within a proper range; therefore, the electronic device can work normally and achieve higher performance.
(5)According to one embodiment of the present invention, the temperature controller of the electronic device may include a heating protector, which can turn off the heater when the environmental temperature is too high; thus, the electronic device will not be damaged because of being overheated, so the safety of the electronic device can be further increased.

Further scope of applicability of the present application will become more apparent from the detailed description given hereinafter. However, it should be understood that the detailed description and specific examples, while indicating exemplary embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention and wherein:
FIG. 1, which is a schematic view of a first embodiment of a temperature controller in accordance with the present invention.
FIG. 2 is a flow chart of the first embodiment of the temperature controller in accordance with the present invention.
FIG. 3 is a schematic view of a first embodiment of an electronic device having a temperature controller in accordance with the present invention.
FIG. 4 is a flow chart of the embodiment of FIG. 3.
FIG. 5 is a schematic view of a second embodiment of an electronic device having a temperature controller in accordance with the present invention.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

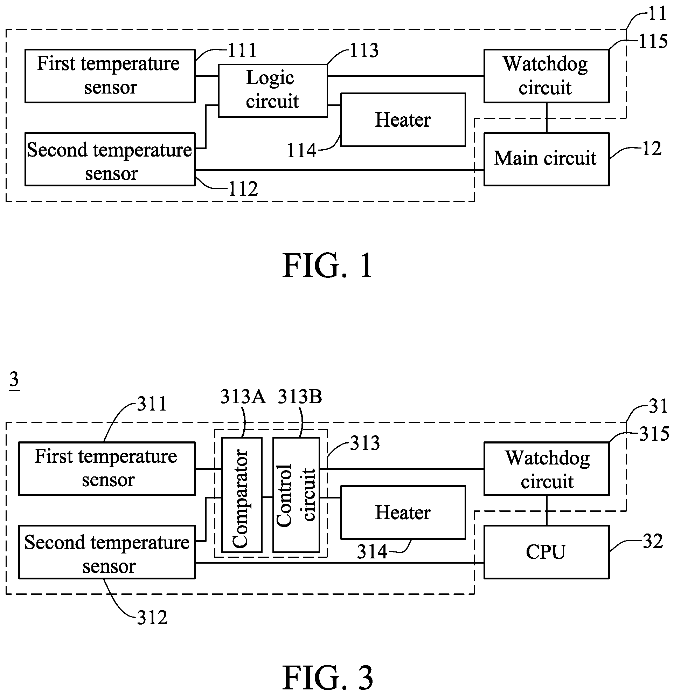

Please refer to FIG. 1, which is a schematic view of a first embodiment of a temperature controller in accordance with the present invention. As shown in FIG. 1, the temperature controller 11 may be installed in an electronic device, and coupled to the main circuit 12 of the electronic device; the temperature controller 11 may include a first temperature sensor 111, a second temperature sensor 112, a logic circuit 113, a heater 114 and a watchdog circuit 115.

The first temperature sensor 111, the heater 114, the watchdog circuit 115 and the second temperature sensor 112 may be coupled to the logic circuit 113; the watchdog circuit 115 and the second temperature sensor 112 may be coupled to the main circuit 12.

The first temperature sensor 111 may detect the environmental temperature of the environment around the main circuit 12. The heater 114 may increase the environmental temperature of the main circuit 12. The logic circuit 113 may compare the environmental temperature of the main circuit 12 with a first temperature; in the preferred embodiment, the logic circuit 113 may include a comparator and a control circuit.

The watchdog circuit 114 may turn on the main circuit 12; in a preferred embodiment, the main circuit 12 may be a CPU. The second temperature sensor 112 may detect the environmental temperature of the main circuit 12.

When the temperature controller 11 is turned on, the heater 14 may be turned on at the same time; the temperature controller 11 is installed in the electronic device, so the temperature controller 11 is turned on when the activation switch of the electronic device is turned on.

When the logic circuit 113 detects that the environmental temperature of the main circuit 12 is higher than the first temperature, the logic circuit 113 may turn on the watchdog circuit 115, and then turn on the main circuit 12 after the watchdog circuit 115 is turned on; then, the second temperature sensor 112 may be turned on after the main circuit 12 is turned on.

When the second temperature sensor 112 detects that the environmental temperature of the main circuit 12 is higher than a second temperature, the logic circuit 113 may turn off the heater 114; when the second temperature sensor 112 detects that the environmental temperature of the main circuit 12 is lower than a third temperature, the logic circuit 113 may turn on the heater 114. Thus, the temperature controller 11 may keep the environmental temperature of the main circuit 12 between the second temperature and the third temperature; in this way, the main circuit 12 can work normally.

As described above, the temperature controller 11 can replace the microcontroller unit (MCU) by a simple logic control circuit, so the cost of the temperature controller 11 can be significantly reduced.

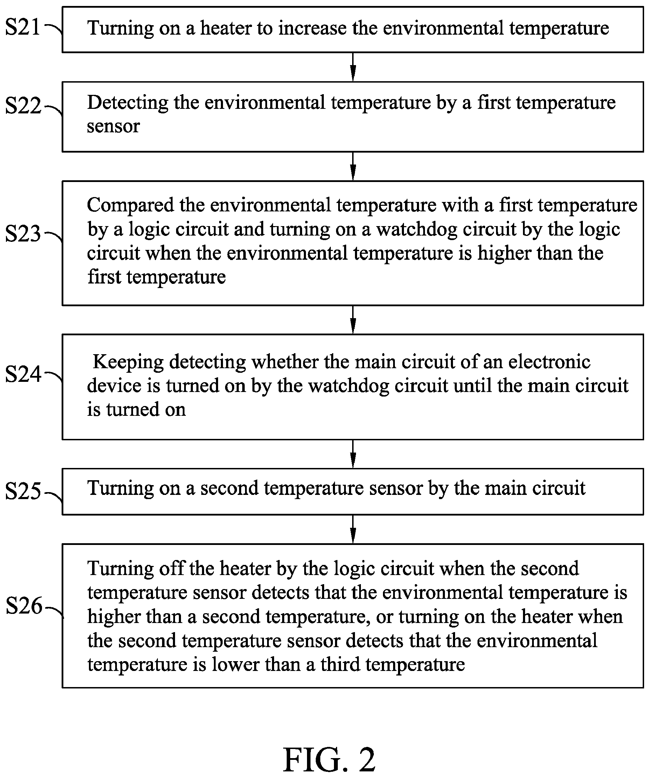

Please refer to FIG. 2, which is a flow chart of the first embodiment of the temperature controller in accordance with the present invention. As shown in FIG. 2, the embodiment may include the following steps:

In the Step S21: turning on a heater to increase the environmental temperature.

In the Step S22: detecting the environmental temperature by a first temperature sensor.

In the Step S23: compared the environmental temperature with a first temperature by a logic circuit and turning on a watchdog circuit by the logic circuit when the environmental temperature is higher than the first temperature.

In the Step S24: keeping detecting whether the main circuit of an electronic device is turned on by the watchdog circuit until the main circuit is turned on.

In the Step S25: turning on a second temperature sensor by the main circuit.

In the Step S26: turning off the heater by the logic circuit when the second temperature sensor detects that the environmental temperature is higher than a second temperature, or turning on the heater when the second temperature sensor detects that the environmental temperature is lower than a third temperature.

Please refer to FIG. 3, which is a schematic view of a first embodiment of an electronic device having a temperature controller in accordance with the present invention. As shown in FIG. 3, the electronic device may include a temperature controller 31 and a CPU 32. The temperature controller 11 may include a first temperature sensor 311, a second temperature sensor 312, a logic circuit 313, a heater 314 and a watchdog circuit 315; the logic circuit 313 may include a comparator 313A and a control circuit 313B.

The first temperature sensor 311 and the second temperature sensor 312 may be coupled to the comparator 313A; the comparator 313A may be coupled to the control circuit 313B; the watchdog circuit 315 and the heater 314 may be coupled to the control circuit 313B; the watchdog circuit 315 and the second temperature sensor 312 may be simultaneously coupled to the CPU 32 of the electronic device 3.

After the electronic device 3 is turned on, the heater 314 may be turned on; then, the first temperature sensor 311 may detect the environmental temperature of the environment around the CPU 32; in the embodiment, the first temperature sensor 311 may be a hardware sensor. The heater 314 may increase the environmental temperature of the CPU 32. The comparator 313A may compare the environmental temperature of the CPU 32 with a first temperature, which is a predetermined reference value; in the embodiment, the first temperature may be -25 ° C.

When the comparator 313A detects that the environmental temperature of the CPU 32 is higher than -25 ° C, the comparator 313A may turn on the watchdog circuit 315, and the watchdog circuit 315 may detect whether the CPU 32 is turned on; if the CPU 32 fails to be turned on, the watchdog circuit 315 may repeatedly turn on the CPU 32 until the CPU 32 is turned on; besides, the watchdog circuit 314 may keep receiving the signals transmitted from the CPU 32; if the watchdog circuit 314 fails to receive the signals transmitted from the CPU 32, the watchdog circuit 314 may keep transmitting the re-activation signal to the CPU 32 until the CPU 32 is turned on. After the CPU 32 is turned on, the CPU 32 may turn on the second temperature sensor 312.

The second temperature sensor 312 may detect the environmental temperature of the CPU 32, and the comparator 313A may compare the environmental temperature with a second temperature and a third temperature, which are also predetermined reference values; in the embodiment, the second temperature and the third temperature are 0 ° C and -5 ° C respectively.

When the comparator 313A determines that the second temperature sensor 312 detects that the environmental temperature of the CPU 32 is higher than 0 ° C, the control circuit 313B may turn off the heater 314; on the contrary, when the comparator 313A determines that the environmental temperature of the CPU 32 is higher than -5 ° C, the control circuit 313B may turn on the heater 314; in the embodiment, the second temperature sensor 312 may be a software sensor, such as I²C sensor and the like. Therefore, the temperature controller 31 of the electronic device 3 may keep the environmental temperature of the CPU 32 between the second temperature (0°C) and the third temperature (-5°C), so the CPU 32 can work normally.

It is worthy to point out that the conventional electronic device needs to use the built-in temperature sensor to control the environmental temperature, and the temperature controller should be controlled by the microcontroller unit; however, the microcontroller unit is of high cost, which significantly increases the cost of the electronic device and reduces its market competitiveness. On the contrary, according to one embodiment of the present invention, the temperature controller of the electronic device may be controlled by a simple logic circuit having a comparator instead of the microcontroller unit; therefore, the cost of the electronic device can be significantly reduced and the market competitiveness of the electronic device can be increased.

Also, as the conventional electronic device should be controlled by the microcontroller unit, so the program designers should learn different instruction sets to design the programs for the mass production of the electronic device, which further increase the cost of the electronic device. On the contrary, according to one embodiment of the present invention, the temperature controller of the electronic device may include a simple logic circuit having a comparator for substituting the microcontroller unit; thus, the program designer does not need to learn different instruction sets to design the programs for the mass production of the electronic device, which can reduce the manpower cost and further decrease the cost of the electronic device.

Besides, according to one embodiment of the present invention, the temperature controller of the electronic device may include a simple logic circuit having a comparator for substituting the microcontroller unit, and the logic circuit is easily to be operated and scheduled; therefore, the temperature controller is convenient and flexible in use.

Further, according to one embodiment of the present invention, the temperature controller of the electronic device may include a second temperature sensor, which can effectively control the environmental temperature to be within a proper range; therefore, the electronic device can work normally and achieve higher performance. Accordingly, the present invention definitely has an inventive step.

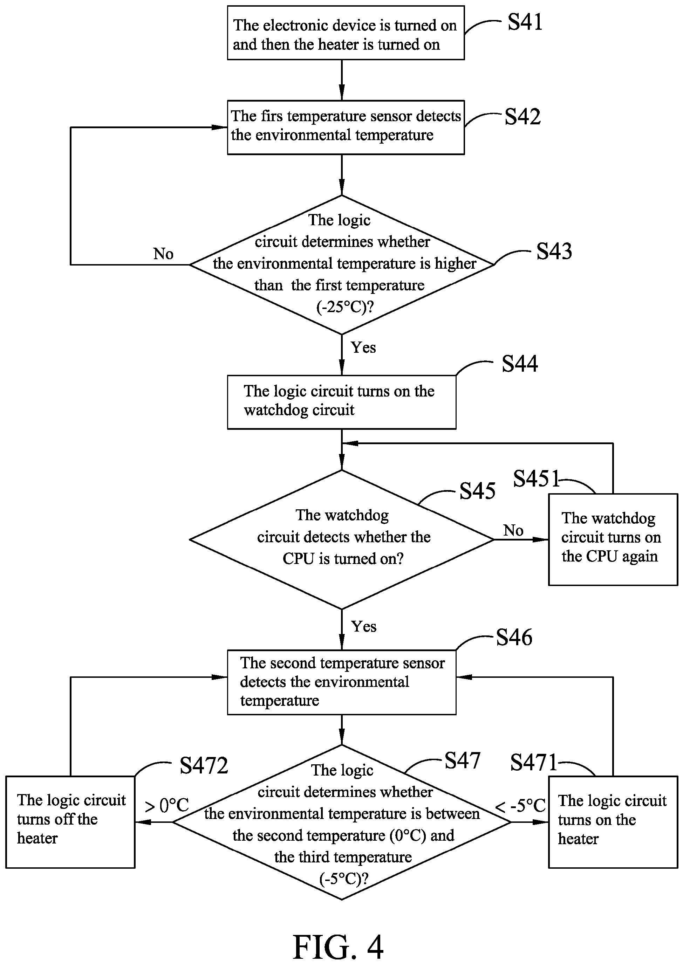

Please refer to FIG. 4, which is a flow chart of the first embodiment of the electronic device having the temperature controller in accordance with the present invention. As shown in FIG. 4, the embodiment may include the following steps:

In the Step S41: the electronic device is turned on and then the heater is turned on; then, the flow proceeds to the Step S42.

In the Step S42: the firs temperature sensor detects the environmental temperature; the flow proceeds to the Step S43.

In the Step S43: the logic circuit determines whether the environmental temperature is higher than the first temperature (-25°C)? If it is, the flow proceeds to the Step S44; if it is not, the flow returns to the Step S42.

In the Step S44: the logic circuit turns on the watchdog circuit; then, the flow proceeds to the Step S45.

In the Step S45: the watchdog circuit detects whether the CPU is turned on? If it is, the flow proceeds to the Step S46; if it is not, the flow proceeds to the Step S451.

In the Step S451: the watchdog circuit turns on the CPU again; then, the flow returns to the Step S45.

In the Step S46: the second temperature sensor detects the environmental temperature; then, the flow proceeds to the Step S47.

In the Step S47: the logic circuit determines whether the environmental temperature is between the second temperature (0°C) and the third temperature(-5°C)? If the environmental temperature is higher than the second temperature (0°C), the flow proceeds to the Step S471; if the environmental temperature is lower than the third temperature (-5°C), the flow proceeds to the Step S472.

In the Step S471: the logic circuit turns off the heater; then, the flow returns to the Step S46.

In the Step S472: the logic circuit turns on the heater; then, the flow returns to the Step S46.

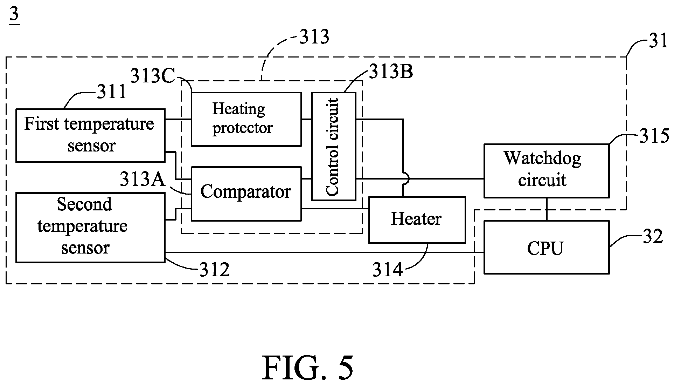

Please refer to FIG. 5, which is a schematic view of a second embodiment of an electronic device having a temperature controller in accordance with the present invention. As shown in FIG. 5, the electronic device may include a temperature controller 31 and a CPU 32. The temperature controller 11 may include a first temperature sensor 311, a second temperature sensor 312, a logic circuit 313, a heater 314 and a watchdog circuit 315; the logic circuit 313 may include a comparator 313A, a control circuit 313B and a heating protector 313C.

The first temperature sensor 311 and the second temperature sensor 312 may be coupled to the comparator 313A; the comparator 313A may be coupled to the control circuit 313B; the watchdog circuit 315 and the heater 314 may be coupled to the control circuit 313B; the watchdog circuit 315 and the second temperature sensor 312 may be simultaneously coupled to the CPU 32 of the electronic device 3.

Similarly, after the electronic device 3 is turned on, the first temperature sensor 311 may detect the environmental temperature of the CPU 32. The heater 314 may increase the environmental temperature of the CPU32. The comparator 313A may compare the environmental temperature of the CPU 32 with a first temperature (-25°C), which is a predetermined reference value.

When the comparator 313A detects that the environmental temperature of the CPU 32 is higher than the first temperature, the comparator 313A may turn on the watchdog circuit 315, and the watchdog circuit 315 may detect whether the CPU 32 is turned on; if the CPU 32 fails to be turned on, the watchdog circuit 315 may repeatedly turn on the CPU 32 until the CPU 32 is turned on; besides, the watchdog circuit 314 may keep receiving the signals transmitted from the CPU 32; if the watchdog circuit 314 fails to receive the signals transmitted from the CPU 32, the watchdog circuit 314 may keep transmitting the re-activation signal to the CPU 32 until the CPU 32 is turned on. After the CPU 32 is turned on, the CPU 32 may turn on the second temperature sensor 312.

The second temperature sensor 312 may detect the environmental temperature of the CPU 32, and the comparator 313A may compare the environmental temperature with a second temperature (0°C) and a third temperature (-5°C), which are also predetermined reference values.

When the comparator 313A determines that the second temperature sensor 312 detects that the environmental temperature of the CPU 32 is higher than the second temperature, the control circuit 313B may turn off the heater 314; on the contrary, when the comparator 313A determines that the environmental temperature of the CPU 32 is higher than the third temperature, the control circuit 313B may turn on the heater 314. Therefore, the temperature controller 31 of the electronic device 3 may keep the environmental temperature of the CPU 32 between the second temperature (0°C) and the third temperature (-5°C), so the CPU 32 can work normally.

The difference between the embodiment and the previous embodiment is that the temperature controller 31 of the embodiment may further include a heating protector 313C; in the embodiment, the heating protector 313C may be directly integrated with the logic circuit 313; the heating protector 313C may be coupled to the first temperature sensor 311 and the control circuit 313B, and the control circuit 313B may turn off the heater 314 when the first temperature sensor 311 detects that the environmental temperature is higher than a fourth temperature; in the embodiment, the fourth temperature may be 20°C. As described above, when the second temperature sensor 312 malfunctions, the heater 314 may be always on; however, the heating protector 313C may turn off the heater 314 when the environmental temperature is too high so as to avoid that the electronic device 3 is burned; therefore, the safety of the electronic device 3 can be effectively improved.

It is worthy to point out that the conventional electronic device has not protection mechanism; thus, if the built-in temperature controller malfunctions, the heater may not be turnoff and keep heating up the electronic device; accordingly, the electronic device may be burned, or even may result in a fire disaster, so the safety of the electronic device should be further improved. On the contrary, according to one embodiment of the present invention, the temperature controller of the electronic device may include a heating protector, which can turn off the heater when the environmental temperature is too high; thus, the electronic device will not be damaged because of being overheated, so the safety of the electronic device can be further increased.

To sum up, according to one embodiment of the present invention, the temperature controller of the electronic device may include a simple logic circuit having a comparator for substituting the microcontroller unit; therefore, the cost of the electronic device can be significantly reduced.

According to one embodiment of the present invention, the temperature controller of the electronic device may include a simple logic circuit having a comparator for substituting the microcontroller unit; thus, the program designer does not need to learn different instruction sets to design the programs for the mass production of the electronic device, which can reduce the manpower cost and further decrease the cost of the electronic device.

Also, according to one embodiment of the present invention, the temperature controller of the electronic device may include a simple logic circuit having a comparator for substituting the microcontroller unit, and the logic circuit is easily to be operated and scheduled; therefore, the temperature controller is convenient and flexible in use.

Besides, according to one embodiment of the present invention, the temperature controller of the electronic device may include a second temperature sensor, which can effectively control the environmental temperature to be within a proper range; therefore, the electronic device can work normally and achieve higher performance.

Moreover, according to one embodiment of the present invention, the temperature controller of the electronic device may include a heating protector, which can turn off the heater when the environmental temperature is too high; thus, the electronic device will not be damaged because of being overheated, so the safety of the electronic device can be further increased.

It will be apparent to those skilled in the art that various modifications and variations can be made to the disclosed embodiments. It is intended that the specification and examples be considered as exemplary only, with a true scope of the invention being indicated by the following claims and their equivalents.

## Claims

1. A temperature controller, comprising:
a first temperature sensor, operable to detect an environmental temperature;
a heater, turned on after the temperature controller being turned on so as to increase the environmental temperature;
a logic circuit, coupled to the first temperature sensor and the heater, and operable to compare the environmental temperature with a first temperature;
a watchdog circuit, coupled to the logic circuit and a main circuit of an electronic device; and
a second temperature sensor, coupled to the logic circuit and the main circuit, and operable to detect the environmental temperature;
wherein the logic circuit turns on the watchdog circuit after the environmental temperature is higher than the first temperature for the watchdog circuit to keep detecting whether the main circuit is turned on until the main circuit is turned on; the second temperature sensor is turned on after the main circuit is turned on so as to detect the environmental temperature; the logic circuit turns off the heater after the second temperature sensor detects that the environmental temperature is higher than a second temperature, or turns on the heater when the environmental temperature is lower than a third temperature.

2. The temperature controller of claim 1, further comprising a heating protector, wherein the heating protector is coupled to the first temperature sensor and the heater, and turns off the heater after the first temperature sensor detects that the environmental temperature is higher than a fourth temperature.

3. The temperature controller of claim 1, wherein the watchdog circuit keeps detecting whether the main circuit is turned on; if the main circuit fails to be turned on, the watchdog circuit repeatedly turns on the main circuit until the main circuit is turned on.

4. The temperature controller of claim 1, wherein the main circuit is a central processing unit, and the first temperature sensor is a hardware sensor, and the second temperature sensor is a software sensor.

5. The temperature controller of claim 1, wherein the logic circuit comprises a comparator and a control circuit.

6. The temperature controller of claim 2, wherein the heating protector is a comparator and is integrated with the logic circuit.

7. An electronic device, comprising a temperature controller and a main circuit, and the temperature controller comprising:
a first temperature sensor, operable to detect an environmental temperature;
a heater, turned on after the temperature controller being turned on so as to increase the environmental temperature;
a logic circuit, coupled to the first temperature sensor and the heater, and operable to compare the environmental temperature with a first temperature;
a watchdog circuit, coupled to the logic circuit and a main circuit of an electronic device; and
a second temperature sensor, coupled to the logic circuit and the main circuit, and operable to detect the environmental temperature;
wherein the logic circuit turns on the watchdog circuit after the environmental temperature is higher than the first temperature for the watchdog circuit to keep detecting whether the main circuit is turned on until the main circuit is turned on; the second temperature sensor is turned on after the main circuit is turned on so as to detect the environmental temperature; the logic circuit turns off the heater after the second temperature sensor detects that the environmental temperature is higher than a second temperature, or turns on the heater when the environmental temperature is lower than a third temperature.

8. The electronic device of claim 7, wherein the temperature controller further comprises a heating protector; the heating protector is coupled to the first temperature sensor and the heater, and turns off the heater after the first temperature sensor detects that the environmental temperature is higher than a fourth temperature.

9. The electronic device of claim 7, wherein the watchdog circuit keeps detecting whether the main circuit is turned on; if the main circuit fails to be turned on, the watchdog circuit repeatedly turns on the main circuit until the main circuit is turned on.

10. The electronic device of claim 7, wherein the electronic device is an access point or a router; the main circuit is a central processing unit; the first temperature sensor is a hardware sensor; and the second temperature sensor is a software sensor.

11. The electronic device of claim 7, wherein the logic circuit comprises a comparator and a control circuit.

12. The electronic device of claim 8, wherein the heating protector is a comparator and is integrated with the logic circuit.

13. A temperature control method, comprising the following steps:
turning on a heater after a temperature controller is turned on;
detecting an environmental temperature by a first temperature sensor;
comparing the environmental temperature with a first temperature by a logic circuit and turning on a watchdog circuit by the logic circuit when the environmental temperature is higher than the first temperature;
keeping detecting whether a main circuit of an electronic device is turned on by the watchdog circuit until the main circuit is turned on;
turning on a second temperature sensor by the main circuit; and
turning off the heater by the logic circuit when the second temperature sensor detects that the environmental temperature is higher than a second temperature, or turning on the heater when the second temperature sensor detects that the environmental temperature is lower than a third temperature.

14. The temperature control method of claim 13, further comprising the following step:
turning off the heater by a heating protector when the first temperature sensor detects that the environmental temperature is higher than a fourth temperature.

15. The temperature control method of claim 13, further comprising the following step:
keeping detecting whether the main circuit is turned on by the watchdog circuit, and repeatedly turning on the main circuit by the watchdog circuit if the main circuit fails to be turned on until the main circuit is turned on.
